# EUROPEAN PATENT SPECIFICATION

(11) **EP 1 595 722 B1**
(45) Date of publication and mention of the grant of the patent: **19.10.2011**
(21) Application number: 04705177.6
(22) Date of filing: 26.01.2004
(51) Int. Cl.: B60C 19/12, B29C 73/22

(54) **PNEUMATIC TIRE**
LUFTREIFEN
PNEUMATIQUE

(30) Priority: 28.01.2003 JP 2003018780
(43) Date of publication of application: 16.11.2005
(73) Proprietor: THE YOKOHAMA RUBBER CO., LTD., Tokyo 105-8685 (JP); HONDA GIKEN KOGYO KABUSHIKI KAISHA, Minato-ku, Tokyo 107-8556 (JP)
(72) Inventor: FUKUTOMI, Takashi c/o The Yokohama Rubber Co., Ltd., Kanagawa 2548601 (JP); SEKIGUCHI, Takumi c/o The Yokohama Rubber Co., Ltd., Kanagawa 2548601 (JP); NAKAKITA, Issei c/o The Yokohama Rubber Co., Ltd., Kanagawa 2548601 (JP); NAITO, Mitsuru c/o The Yokohama Rubber Co., Ltd., Kanagawa 2548601 (JP); KOBAYASHI, Yuichi c/o The Yokohama Rubber Co., Ltd., Kanagawa 2548601 (JP); WATANABE, Kouji c/o The Yokohama Rubber Co., Ltd., Kanagawa 2548601 (JP); MAKINO, Satoshi c/o K.K. Honda Gijutsu Kenkyusho, Saitama 3510193 (JP); TOYOSHIMA, Takayuki c/o K.K. Honda Gijutsu Kenkyusho, Saitama 3510193 (JP)
(74) Representative: HOFFMANN EITLE
(86) International application number: PCT/JP2004/000643
(87) International publication number: WO 2004/067299

(56) References cited:
- WO-A1-01/60894
- DE-A1- 2 639 391
- JP-A- 6 226 870
- JP-A- 10 071 806
- JP-A- 11 302 629
- JP-A- 53 055 802
- JP-A- 2000 343 917
- US-A- 4 776 888

## Description

### TECHNICAL FIELD

The present invention relates to a pneumatic tire having a puncture prevention function, and more particularly to a pneumatic tire having a self-seal function to prevent a rapid drop in tire pressure when the tire steps on a nail or the like at the time of running.

### BACKGROUND ART

Along with development of express highways, in order to ensure safety of a vehicle when its tire steps on a nail or the like at the time of running, there have been proposed a number of pneumatic tires which is made to prevent a rapid drop in pressure when the tire gets punctured.

As such a pneumatic tire, there is one which prevents puncture in the following manner. Specifically, an adhesive sealant layer is previously formed on an inner surface of the tire in production of the tire, and, when a nail or the like reaches the inside of the tire, a sealant substance adheres to the nail or the like and exerts a sealing effect.

The adhesive sealant is required not to allow the sealant substance to flow by centrifugal force due to high-speed running of the tire, and to exert the sealing effect in such a manner that the sealant substance adheres to a nail or the like when the tire steps on the nail or the like and is guided into a nail hole along with falling off of the nail or the like.

Incidentally, as the pneumatic tire including the adhesive sealant layer, there has been disclosed a pneumatic tire in which a rubber composition containing polyisobutylene rubber, an inorganic filler, and peroxide is transformed into a sealant by utilizing its property that polyisobutylene rubber is decomposed by peroxide (for example, see Japanese patent application *Kokai* publication No. Sho 53 (1978)-55802, which is considered to be the most relevant document to the subjet-matter of claim 1.

However, in the foregoing pneumatic tire, the sealing effect achieved by the sealant substance is not always sufficient. As a result, it is required to increase the thickness of the adhesive sealant layer, thus causing an increase in weight of the tire.

### DISCLOSURE OF THE INVENTION

It is an object of the present invention to provide a pneumatic tire of which self-seal function can be improved while an increase in weight of the tire is minimized.

A pneumatic tire of the present invention to achieve the foregoing object has an adhesive sealant layer in a region corresponding to at least a tread portion on the inner side of the tire, the adhesive sealant layer being constituted from a rubber composition containing a rubber component to be decomposed by peroxide and 0.2 to 20 parts by weight of peroxide per 100 parts by weight of the rubber component, in which fibrillated short fibers with an average length of 100 to 5000 µm are mixed and scattered.

As described above, the fibrillated short fibers are mixed and scattered in the adhesive sealant layer. Thus, adherence of a sealant substance to an intruding object such as a nail is improved by the existence of the fibrillated short fibers. Consequently, excellent seal performance can be achieved even if the adhesive sealant layer is thinned, and increase in weight of the tire can be minimized. Moreover, the above-described fibrillated short fibers effectively suppress flow of the adhesive sealant layer. Thus, it is possible to more surely prevent movement of the sealant substance due to centrifugal force in high-speed running.

In a pneumatic tire including an inner liner layer on the inner side of the tire, it is preferable that an adhesive sealant layer is disposed on an inner side of the inner liner layer, and a cover sheet rubber layer is disposed on an inner surface of the adhesive sealant layer. Accordingly, the adhesive sealant layer may be formed by simultaneously performing decomposition of a rubber composition constituting the adhesive sealant layer and vulcanization of other constituent components of the tire. Thus, the pneumatic tire including the adhesive sealant layer on the inner side of the tire can be efficiently produced.

As the fibrillated short fibers, it is preferable that short fibers having a cross section of a sea-island structure made from at least two kinds of polymers are used. To be more specific, it is preferable that short fibers having a cross section of a sea-island structure made from a polyvinyl alcohol polymer (A) and a water-insoluble polymer (B) are used, the fibers having a weight ratio (A)/(B) of 90/10 to 80/20. By use of the fibrillated short fibers described above, the seal performance can be significantly improved, and the flow of the sealant substance can be effectively prevented.

### BRIEF DESCRIPTION OF THE DRAWINGS

Fig. 1 is a meridian half sectional view of a tire showing a pneumatic tire according to an embodiment of the present invention.
Fig. 2 is an explanatory view for showing a self-seal function of the pneumatic tire of the present invention.

### BEST MODE FOR CARRYING OUT THE INVENTION

With reference to the accompanying drawings, a configuration of the present invention will be described in detail below. In the respective drawings, the same constituent components are denoted by the same reference numerals, and repetitive description will be omitted.

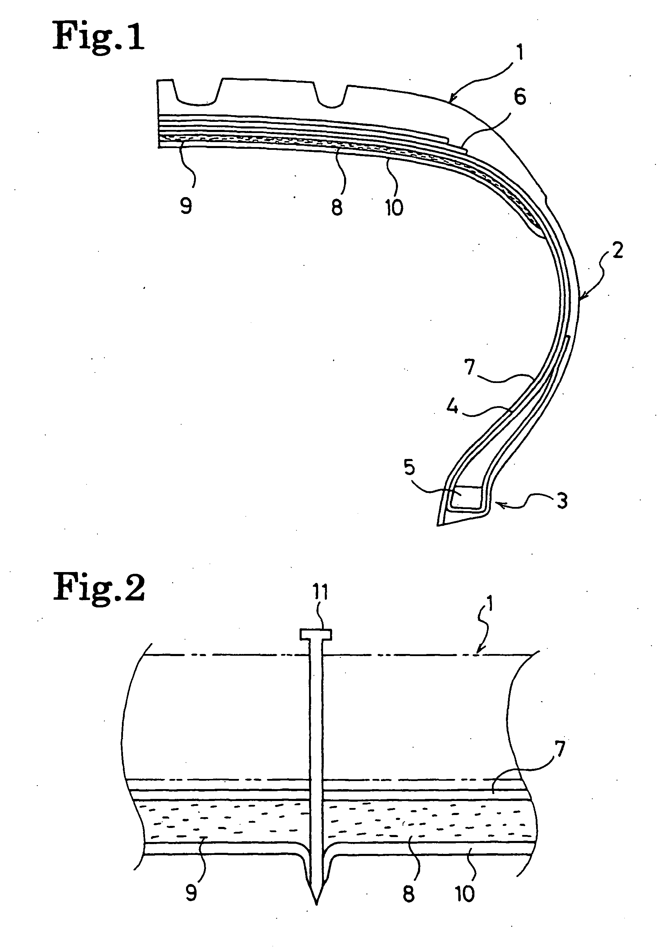

Fig. 1 shows a pneumatic tire according to an embodiment of the present invention. Reference numeral 1 is a tread portion, 2 is a sidewall portion, and 3 is a bead portion. Between a left-right pair of bead portions 3 and 3 is arranged a carcass layer 4. An end of the carcass layer 4 is folded from an inner side of the tire to an outer side thereof around a bead core 5. On an outer peripheral side of the carcass layer 4 in the tread portion 1, a belt layer 6 is provided. Moreover, on an inner side of the carcass layer 4, an inner liner layer 7 is provided.

At a position corresponding to the tread portion 1 on an inner side of the inner liner layer 7, an adhesive sealant layer 8 is disposed, in which fibrillated short fibers 9 are mixed and scattered. On an inner side of the adhesive sealant layer 8, a cover sheet rubber layer 10 is disposed, which covers an inner surface of the adhesive sealant layer 8. Note that the cover sheet rubber layer 10 covering the adhesive sealant layer 8 plays a role of preventing adhesion of the adhesive sealant layer 8 to a bladder surface in vulcanization of the tire, and of maintaining the adhesive sealant layer 8 to have a uniform thickness.

Fig. 2 is an explanatory view for showing a self-seal function of the pneumatic tire described above. As shown in Fig. 2, when a nail 11 penetrates to the adhesive sealant layer 8 on the inner side of the tire from the tread portion 1 passing through the inner liner layer 7, a sealant substance closely adheres to the nail 11 to prevent air leakage. Moreover, when the nail 11 is pulled out of the tread portion 1 by centrifugal force due to high-speed running, the sealant substance adhering around the nail 11 is drawn into a through-hole of the tread portion 1 to seal the hole. Thus, the air leakage is prevented. In this event, the larger the amount of the sealant substance drawn into the through-hole is, the more the sealing effect is improved. Moreover, the thicker the adhesive sealant layer 8 is, the more seal performance is improved. However, when the thickness of the adhesive sealant layer 8 is increased, weight of the tire is significantly increased.

Accordingly, as described above, the fibrillated short fibers 9 are mixed and scattered in the adhesive sealant layer 8 disposed in a region corresponding to at least the tread portion 1 on the inner side of the tire. Thus, adhesion of the sealant substance to an intruding object such as a nail is improved. Accordingly, excellent seal performance can be achieved while the thickness of the adhesive sealant layer 8 is reduced. Moreover, the increase in weight of the tire can be minimized.

In order to minimize the weight increase as much as possible while ensuring the seal performance, it is preferable that the thickness of the adhesive sealant layer 8 is set to 1 to 4 mm. If the thickness thereof is less than 1 mm, the seal performance becomes insufficient. If the thickness thereof exceeds 4 mm, the weight reduction effect becomes insufficient.

The adhesive sealant layer 8 described above is obtained by heat-treating a rubber composition containing a rubber component to be decomposed by peroxide and 0.2 to 20 parts by weight of peroxide per 100 parts by weight of the rubber component, in which fibrillated short fibers are mixed and scattered.

As the rubber component having a property of being decomposed by peroxide (hereinafter referred to as a peroxide-decomposable rubber component), polyisobutylene rubber or butyl rubber (IIR) can be cited. Butyl rubber is obtained by copolymerizing isobutylene and a small amount of isoprene. Usually, butyl rubber with a degree of unsaturation of not more than 2.2 mol% is used.

Here, if a blending quantity of peroxide is less than 0.2 part by weight per 100 parts by weight of the peroxide-decomposable rubber component, the rubber component is not sufficiently decomposed. Thus, the sealing effect becomes insufficient. If the blending quantity thereof exceeds 20 parts by weight, the decomposition progresses too far, thereby lowering viscosity. Consequently, the centrifugal force causes the sealant substance to flow in the high-speed running, thus making it difficult to maintain the seal performance across the entire tread portion 1.

As peroxide, the following peroxide groups can be used, including: an acyl peroxide group (for example; benzoyl peroxide and p-chlorobenzoyl peroxide); a ketone peroxide group (for example, methyl ethyl ketone peroxide); a peroxy ester group (for example, t-butyl peroxyacetate, t-butyl peroxybenzoate, and t-butyl peroxyphthalate); an alkyl peroxide group (for example, dicumyl peroxide, di-t-butyl peroxybenzoate, and 1, 3-bis(t-butylperoxyisopropyl)benzene); a hydroperoxide group (for example, t-butylhydroperoxide); and the like.

In the rubber composition for sealant, another rubber component can be blended in addition to the peroxide-decomposable rubber component. This rubber component is not particularly limited as long as the component can be used for tire. For example, isoprene rubber, styrene-butadiene rubber, butadiene rubber, natural rubber, and the like can be cited.

Moreover, according to need, the following may be added to the rubber composition for sealant described above, which includes: a catalyst such as cobalt naphthenate to accelerate decomposition of the rubber component by peroxide; an inorganic filler such as carbon black and silica; an adhesive such as polybutene; and a plasticizer such as aromatic process oil, naphthenic process oil and paraffinic process oil. However, clay is undesirable because clay inhibits decomposition by peroxide.

As the fibrillated short fibers, it is preferable to use short fibers having a cross section of a sea-island structure made from two kinds or more of polymers. These short fibers are mixed in the rubber composition constituting the sealant substance before the adhesive sealant layer is disposed on the inner side of the tire. Through this process, both ends of the short fibers having the cross section of the sea-island structure come loose to be in a fibrillated state by shearing stress on the rubber composition along with the mixing. Thus, the short fibers come to be in a state of being scattered in the adhesive sealant layer. These fibrillated short fibers have significant effects of improving the seal performance and of preventing the flow of the sealant substance, compared to those which are not fibrillated.

The polymers constituting the short fibers are not particularly limited. However, it is preferable that the short fibers are made from at least a polyvinyl alcohol polymer (A) and a water-insoluble polymer (B), and have a weight ratio (A)/(B) of 90/10 to 80/20. If the weight ratio (A)/(B) is outside of the above-described range, fibrillation becomes insufficient. Thus, sufficient effects of improving the seal performance and of preventing the flow of the sealant substance are not obtained.

Moreover, an average length of the short fibers is adjusted to 100 to 5000 µm. If this average length is less than 100 µm, sufficient effects of improving the seal performance and of preventing the flow of the sealant substance are not obtained. If the average length exceeds 5000 µm, processability in mixing and extrusion of the rubber composition is lowered. Moreover, a blending quantity of the short fibers depends on the length thereof. Specifically, if the length of the short fibers is short, large amounts of short fibers are blended to achieve both of the seal performance and the processability. Meanwhile, if the length of the short fibers is long, a relatively small amount of short fibers are blended. For example, if the length of the short fibers is 4000 µm, it is preferable that 1 to 5 parts by weight of short fibers are blended.

The above-described pneumatic tire can be produced by use of the following method. Specifically, in the steps of producing a normal pneumatic tire, a sheet of a rubber composition for sealant (an adhesive sealant layer), in which fibrillated short fibers are scattered, is disposed in a region corresponding to at least a tread portion on an inner side of an unvulcanized tire. The unvulcanized tire thus formed is vulcanized to decompose a rubber component contained in the above-described rubber composition for sealant. Thus, the adhesive sealant layer 8 having the fibrillated short fibers scattered therein is formed.

### [Application Example]

Eight kinds of pneumatic tires (Application Example 1 and

Comparative Examples 1 to 7) are produced, each having a tire size of 205/65R15 and a punctureless structure. Specifically, in the pneumatic tires, respective adhesive sealant layers shown in Table 1 are provided on the inner side of the tires.

The respective pneumatic tires are set to be the same except for configurations of the adhesive sealant layers, and seal performance and processability thereof are evaluated by use of the following method. The results of both evaluations are shown in Table 1.

### Method for evaluating seal performance:

Ten nails having a nominal size of N75 (JIS A5508) are driven into a tread surface, and the nails are pulled out. Thereafter, the tires are let stand for 1 minute, and states of air leakage from nail holes are observed. Subsequently, the number of nail holes with no air leakage is counted, thereby obtaining values of the seal performance.

### Method for evaluating processability:

For rubber compositions constituting the respective adhesive sealant layers, ASTM-A method is performed according to ASTM D2230-77. Thereafter, the compositions are graded based on grading standard B. Accordingly, those with a grade of 6 points or more are evaluated to be good, and those with a grade of 5 points or less are evaluated to have difficulty in extrusion.

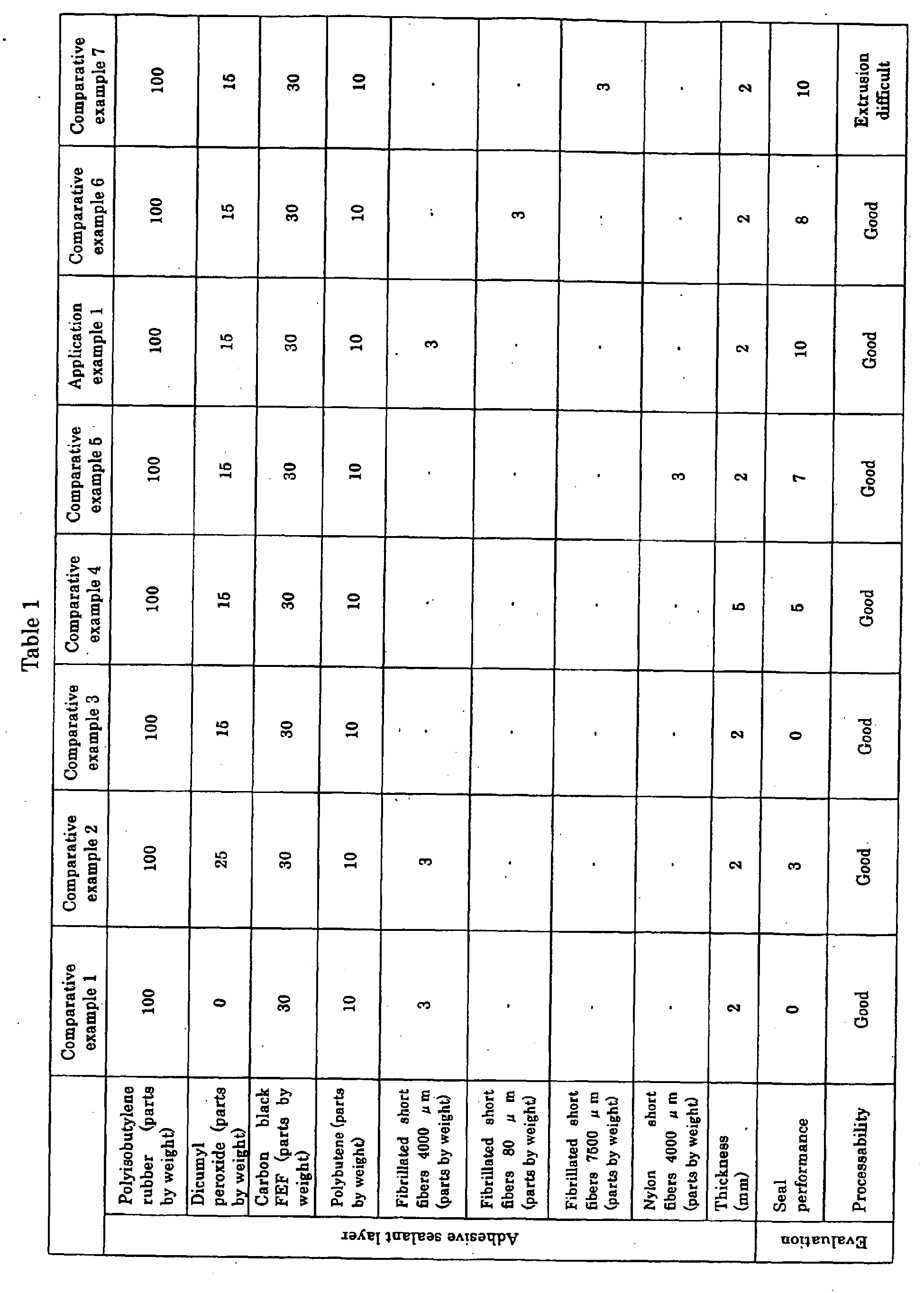

As is clear from Table 1, the tire of Application Example 1, in which the fibrillated short fibers are mixed and scattered in the adhesive sealant layer, can achieve excellent seal performance, even though the thickness of the adhesive sealant layer is 2 mm. Meanwhile, the tires of Comparative Examples 1 to 6 have insufficient seal performance. The tire of Comparative Example 7 has difficulty in extrusion of a sheet of the adhesive sealant layer.

### INDUSTRIAL APPLICABILITY

According to the present invention, an adhesive sealant layer is provided in a region corresponding to at least a tread portion on an inner side of a tire, the adhesive sealant layer being constituted from a rubber composition containing a rubber component to be decomposed by peroxide and 0.2 to 20 parts by weight of peroxide per 100 parts by weight of the rubber component, in which fibrillated short fibers with an average length of 100 to 5000 µ m are mixed and scattered. Thus, a better self-seal function can be achieved while an increase in weight of the tire is minimized.

Although the preferred embodiment of the present invention has been described in detail above, it should be understood that various changes, alternatives, and substitutions can be made to the embodiment without departing from the scope of the present invention, as defined by the attached claims.

## Claims

1. A pneumatic tire comprising an adhesive sealant layer (8) in a region corresponding to at least a tread portion (1) on the inner side of the tire, wherein the adhesive sealant layer (8) is constituted from a rubber composition containing a rubber component to be decomposed by peroxide and 0.2 to 20 parts by weight of peroxide per 100 parts by weight of the rubber component, and fibrillated short fibers (9) with an average length of 100 to 5000 µ m are mixed and scattered in the layer.

2. The pneumatic tire according to claim 1, wherein an inner liner layer (7) is provided on the inner side of the tire, the adhesive sealant layer (8) is disposed on an inner side of the inner liner layer (7), and a cover sheet rubber layer (10) is disposed on an inner surface of the adhesive sealant layer.

3. The pneumatic tire according to any one of claims 1 and 2, wherein the adhesive sealant layer (8) is formed by simultaneously performing decomposition of a rubber composition constituting the adhesive sealant layer and vulcanization of other constituent components of the tire.

4. The pneumatic tire according to any one of claims 1, 2 and 3, wherein the short fibers (9) have a cross section of a sea-island structure made from at least two kinds of polymers.

5. The pneumatic tire according to any one of claims 1, 2 and 3, wherein the short fibers (9) have a cross section of a sea-island structure made from a polyvinyl alcohol polymer (A) and a water-insoluble polymer (B), and have a weight ratio (A)/(B) of 90/10 to 80/20.

## Patentansprüche

1. Luftreifen mit einer klebrigen Abdichtschicht (8) in einem Bereich, der wenigstens einem Laufflächenabschnitt (1) auf der inneren Seite des Reifens entspricht, wobei die klebrige Abdichtschicht (8) durch eine Gummimischung gebildet wird, die eine Gummikomponente, die durch Peroxyd abbaubar ist, und 0,2 bis 20 Gewichtsteile Peroxyd pro 100 Gewichtsteile der Gummikomponente aufweist, und kurze Spleißfasern (9) mit einer durchschnittlichen Länge von 100 bis 5000 µm in die Schicht gemischt und darin verteilt sind.

2. Luftreifen nach Anspruch 1, bei dem eine innere Auskleidungsschicht (7) auf der inneren Seite des Reifens vorgesehen ist, wobei die klebrige Abdichtschicht (8) auf einer inneren Seite der inneren Auskleidungsschicht (7) vorgesehen ist und eine Abdeckfilmgummischicht (10) auf einer inneren Oberfläche der klebrigen Abdichtschicht (8) vorgesehen ist.

3. Luftreifen nach einem der Ansprüche 1 bis 2, bei dem die klebrige Abdichtschicht (8) durch das gleichzeitige Ausführen eines Abbaus einer Gummimischung, welche die klebrige Abdichtschicht bildet, und einer Vulkanisierung der anderen Bestandteile des Reifens ausgebildet wird.

4. Luftreifen nach einem der Ansprüche 1, 2 und 3, bei dem die kurzen Fasern (9) einen Querschnitt mit einer Meer-Inselstruktur aufweisen, die aus wenigstens zwei Arten von Polymeren hergestellt ist.

5. Luftreifen nach einem der Ansprüche 1, 2 und 3, bei dem die kurzen Fasern (9) einen Querschnitt einer Meer-Inselstruktur aufweisen, die aus einem Polyvinyl-Alkoholpolymer (A) und einem wasserunlöslichen Polymer (B) hergestellt ist und die ein Massenverhältnis (A)/(B) von zwischen 90/10 und 80/20 aufweist.

## Revendications

1. Bandage pneumatique comprenant une couche de scellement adhésive (18) dans une région correspondant à au moins une portion de bande de roulement (1) sur le côté intérieur du bandage, où la couche de scellement adhésive (8) est constituée par une composition de caoutchouc contenant le composant de caoutchouc destiné à être décomposé par le peroxyde et 0,2 à 20 parties en poids de peroxyde pour 100 parties en poids du composant de caoutchouc, et des fibres courtes fibrillées (9) d'une longueur moyenne de 100 à 5000 µm sont mélangées et dispersées dans la couche.

2. Bandage pneumatique selon la revendication 1, dans lequel une couche de revêtement intérieure (7) est réalisée sur le côté intérieur du bandage, la couche de scellement adhésive (8) est disposée sur un côté intérieur de la couche de revêtement intérieure (7), et une couche de caoutchouc de feuille de recouvrement (10) est disposée sur une surface intérieure de la couche de scellement adhésive (8).

3. Bandage pneumatique selon l'une quelconque des revendications 1 et 2, dans lequel la couche de scellement adhésive (8) est formée en exécutant simultanément la décomposition d'une composition de caoutchouc constituant la couche de scellement adhésive et la vulcanisation d'autres composants constitutifs du bandage.

4. Bandage pneumatique selon l'une quelconque des revendications 1, 2 et 3, dans lequel les fibres courtes (9) ont une section transversale d'une structure de sea island réalisée à partir d'au moins deux types de polymères.

5. Bandage pneumatique selon l'une quelconque des revendications 1, 2 et 3, dans lequel les fibres courtes (9) ont une section transversale d'une structure de sea island réalisée à partir d'un polymère d'alcool polyvinylique (A) et d'un polymère insoluble dans l'eau (B) et ayant un rapport pondéral (A)/(B) de 90/10 à 80/20.
